# EUROPÄISCHE PATENTSCHRIFT

(11) **EP 0 623 536 B1**
(45) Veröffentlichungstag und Bekanntmachung des Hinweises auf die Patenterteilung: **10.06.1998**
(21) Anmeldenummer: 94106312.5
(22) Anmeldetag: 22.04.1994
(51) Int. Cl.: B65G 57/02, B21D 43/22, B65H 29/68

(54) **Verfahren und Vorrichtung zum Stapeln von tafelförmigen Gütern**
Method of and device for stacking plate-like goods
Procédé et dispositif pour empiler des marchandises en forme de plaques

(30) Priorität: 05.05.1993 DE 4314760
(43) Veröffentlichungstag der Anmeldung: 09.11.1994
(73) Patentinhaber: LTG LUFTTECHNISCHE GMBH, 70435 Stuttgart (DE)
(72) Erfinder: Mokler, Bernhard, D-71032 Böblingen (DE)
(74) Vertreter: Gleiss & Grosse

(56) Entgegenhaltungen:
- EP-A- 0 408 893
- DE-A- 2 455 937
- DE-B- 2 348 320
- DE-C- 853 426
- PATENT ABSTRACTS OF JAPAN vol. 6, no. 138 (M-145) (1016) 27. Juli 1982 & JP-A-57 062 120 (NITSUSHIN SEIKOU)
- SOVIET INVENTIONS ILLUSTRATED Section PQ, Week E39, 10. November 1982 Derwent Publications Ltd., London, GB; Class Q35, AN M8840 E & SU-A-882 896 (SLAVY METAL EQUIP) 23. November 1981

## Beschreibung

Die Erfindung betrifft eine Vorrichtung gemäß den Merkmalen des Oberbegriffs des Anspruchs 1.

Eine derartige Vorrichtung wird beispielsweise bei Stapeleinrichtungen für einen kontinuierlichen Betrieb von Blechtafeltrocknern eingesetzt. Die aus einem Trockenofen kommenden, frisch lackierten Blechtafeln werden mittels einer Transportvorrichtung hintereinanderliegend mit hoher Geschwindigkeit zur Stapelbildung einem Stapeltisch zugeführt. Die Transportvorrichtung kann beispielsweise als Riemen-Trum ausgebildet sein. Im Umlenkbereich des Trums verlassen die Tafeln die Transportvorrichtung; ihre Vorderkante tritt gegen einen federnden Anschlag, wodurch ihre Translationsbewegung gestoppt wird und sie legen sich in Übereinanderanordnung als Stapel auf dem Stapeltisch ab. Vorzugsweise befindet sich eine Palette oder dergleichen auf dem Stapeltisch, so daß ein einfacher Abtransport erfolgen kann. Die von der Transportvorrichtung in zueinander beabstandeter Hintereinanderanordnung zum Stapel transportierten Tafeln weisen bei der Stapelablage eine relativ hohe Geschwindigkeit auf. Diese Geschwindigkeit resultiert aus der hohen Produktionsrate von etwa 6000 bis 10 000 Tafeln pro Stunde. Durch die abrupte Abbremsung der Tafeln aus der hohen Geschwindigkeit heraus, ist eine beschädigungsfreie Stapelung nicht immer möglich.

Aus der EP-A 0 408 893 geht eine Vorrichtung der eingangs genannten Art hervor, bei der Tafeln Vorzugsrollen zugeführt werden, denen eine schräg nach oben gerichtete Blasdüse zugeordnet ist. Ein aus der Blasdüse austretender Luftstrahl beaufschlagt jeweils die Vorderkante der zugehörigen Tafel, so daß sie hochgebogen wird. Im Zuge des Ablagevorgangs der Tafel trifft ihre Hinterkante auf einen schräg nach unten abfallenden Saugbremstisch auf.

Aus der Patent Abstracts of Japan, vol. 6, n° 138, 27. Juli 1982 JP-A-57 062 120 geht eine Anordnung zum Stapeln von Tafeln hervor, die lediglich mechanische Bauteile aufweist, jedoch keine lufttechnische Einrichtung besitzt.

Der Erfindung liegt daher die Aufgabe zugrunde, eine Vorrichtung der eingangs genannten Art anzugeben, mit dem trotz einer hohen Stapelrate eine beschädigungsfreie Ablage möglich ist.

Diese Aufgabe wird erfindungsgemäß durch die Merkmale des Anspruchs 1 gelöst. Durch die Vorabbremsung treffen die abzulegenden Tafeln mit verringerter Geschwindigkeit auf den Anschlag; gleichwohl bleibt die hohe Geschwindigkeit der Transportvorrichtung erhalten, so daß ein hoher Tafeldurchsatz gewährleistet ist. Es ist sogar möglich, bei der erfindungsgemäßen Vorrichtung die Zuführrate noch zu vergrößern, ohne daß es zu Beschädigungen kommt. Es ist vorgeschlagen, daß sich die Folgetafel der vorhergehenden Tafel derart weit nähert, daß die Tafeln in Überlappungsposition gelangen, wodurch vor Beendigung des Ablagevorgangs vorübergehend eine Schuppenstellung vorliegt. Die Annäherung der Folgetafel an die vorhergehende Tafel erfolgt dadurch, daß die vorhergehende Tafel abgebremst wird. Die genannte Überlappungsposition bedeutet nicht, daß sich die beiden Tafeln berühren. Vielmehr taucht die vorhergehende Tafel bereits ab, um auf dem Stapel abgelegt zu werden, während gleichzeitig die Folgetafel - die sich insbesondere oberhalb der vorhergehenden Tafel befindet, da sie noch ungebremst bzw. nur wenig abgebremst ist, in Überlappungsposition gelangt. Zwischen den Tafeln bildet sich im Zuge des Ablagevorgangs ein Luftpolster aus, das eine beschädigungsfreie Stapelung garantiert. Die Abbremsung wird im Bereich der Hinterkante der jeweiligen Tafel vorgenommen. Die Vorderkante der entsprechenden Tafel nähert sich während der Abbremsung in senkrechter Richtung vorzugsweise schneller dem Stapel als die der Abbremsung unterworfene Hinterkante, so daß es zu einer Schrägstellung oder auch durchgebogenen Stellung der Tafel kommt, wobei jedoch die Vorderkante gegenüber der vorhergehenden Tafel auf einem Luftkissen schwebt, so daß keine Kratzer oder Kantenbeschädigungen auftreten.

Sowohl die vorhergehende Tafel als auch die Folgetafel werden jeweils derart mit Luft beblasen, daß sich der Bereich der Hinterkante der Folgetafel einer Bremsvorrichtung nähert und daß sich die Hinterkante der vorhergehenden Tafel ablegt. Durch das Beblasen wird die Bildung der erwähnten Luftkissen unterstützt. Durch das Beblasen im Bereich der Hinterkanten der beiden erwähnten Tafeln erfolgt eine Verringerung des Luftdrucks, so daß sich die Bereiche der Tafeln in Ablagerichtung bewegen. Insbesondere erfolgt das Blasen mittels mindestens einer Düse, vorzugsweise mit zwei Düsen, wobei die eine dem Ende der Transportvorrichtung und die andere der Bremsvorrichtung zugeordnet ist. Das Beblasen erfolgt jeweils in oder etwa in translatorischer Bewegungsrichtung. Durch die Düsenwirkung wird jeweils der erwähnte Unterdruck geschaffen, wodurch sich die Hinterkanten der Tafel beschleunigt in Richtung auf den Stapeltisch bzw. den sich dort bereits befindenden Stapel bewegen. Damit kommen die Tafeln sehr schnell und auch ortsgenau zur Ruhe; die Kollisionsgefahr wird vermindert. Dem Endbereich der Transportvorrichtung ist unterhalb der Transportebene, mindestens ein mit einem Gebläse zusammenwirkender erster Luftauslaß zugeordnet, aus dem ein etwa in Transportrichtung weisender erster Luftstrom austritt. Dieser erste Luftauslaß ist derart als erste Luftdüse ausgebildet, daß der Bereich der Hinterkante einer Tafel beim Ablagevorgang durch Saugwirkung infolge eines Unterdrucks in Ablagerichtung bewegt wird. Durch diesen Unterdruck tritt eine beschleunigte Bewegung in Ablagerichtung im Bereich der Hinterkante der entsprechenden Tafel auf, so daß sie sehr zügig der dort angeordneten Bremsvorrichtung zugeführt wird. Die Bremsvorrichtung befindet sich stromabwärts sowie unterhalb des ersten Luftauslasses. Anstelle des ersten Luftauslasses kann auch eine Absaugeinrichtung dafür sorgen, daß der erwähnte Unterdruck erzeugt wird. Die Bremseinrichtung befindet sich im Bereich eines Auftreffelements für den Bereich der Hinterkante der jeweiligen Tafel. Das erwähnte Auftreffelement ist als Auftrefffläche ausgebildet. Diese Auftrefffläche verläuft insbesondere parallel oder etwa parallel zur Transportebene der Transportvorrichtung. Das Auftreffelement liegt - in Ablagerichtung gesehen - insbesondere oberhalb der Oberseite des bereits gebildeten Stapels. Dies bedeutet, daß sich zumindest die Hinterkante der jeweils betrachteten Tafel im Zuge des weiteren Ablagevorgangs noch weiter in Ablagerichtung, also nach unten, bewegen muß.

Insbesondere trifft die jeweilige abgebremste Tafel mit reduzierter Geschwindigkeit mit ihrer Vorderkante zur Stapelbildung auf den bereits vorstehend genannten Anschlag. Dieser Anschlag ist vorzugsweise federnd ausgebildet, so daß er für die Tafel beschädigungsfrei kinetische Energie vernichten kann.

Nach einem weiteren Ausführungsbeispiel der Erfindung ist dem dem Stapeltisch zugewandten Endbereich des Auftreffelements mindestens ein mit einem Gebläse zusammenwirkender zweiter Luftauslaß zugeordnet, aus dem ein etwa in Transportrichtung weisender, zweiter Luftstrom austritt. Dieser zweite Luftauslaß kann gegenüber dem ersten Luftauslaß mit einem separaten Gebläse versehen sein; es ist jedoch auch möglich, daß beide Luftauslässe von einem gemeinsamen Gebläse gespeist werden.

Der zweite Luftauslaß ist vorzugsweise derart als zweite Luftdüse ausgebildet, daß der Bereich der Hinterkante einer Tafel beim Ablagevorgang durch Saugwirkung infolge eines (weiteren) Unterdrucks in Ablagerichtung bewegt wird. Wenn also eine bereits abgebremste, d. h. die Bremsvorrichtung verlassende Tafel im Zuge des weiteren Ablagevorgangs mit dem Bereich ihrer Hinterkante in den Wirkungsbereich der zweiten Luftdüse gelangt, so wird der Endbereich dieser Tafel beschleunigt in Richtung auf den Stapel abgelegt.

Wie bereits erwähnt, trägt mindestens einer der Luftauslässe zur Bildung von Luftkissen bei, die zwischen einer Tafel und der Oberseite des Stapels und/oder zwischen einer im Ablagevorgang befindlichen und mindestens einer vorhergehenden, sich ebenfalls im Ablagevorgang befindlichen Tafel bilden.

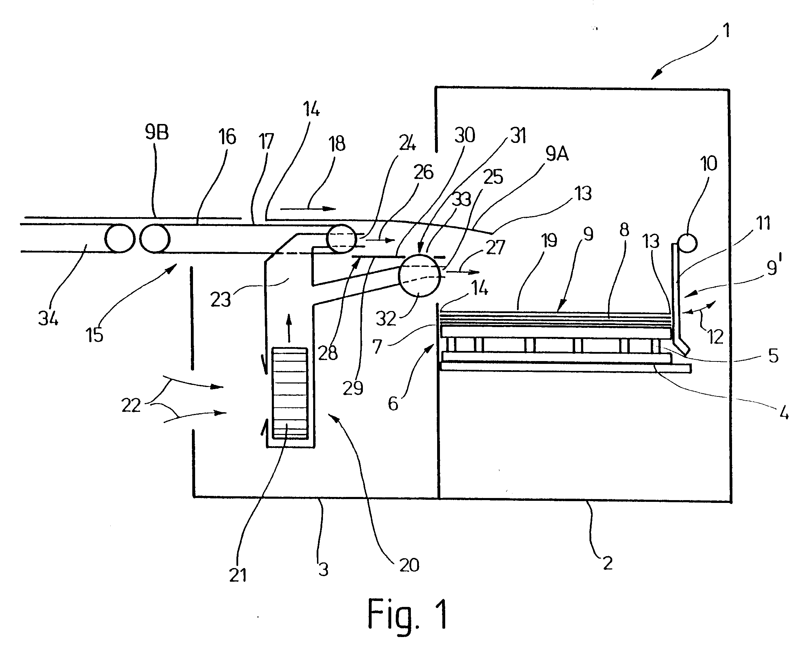

Die Zeichnungen veranschaulichen die Erfindung anhand eines Ausführungsbeispiels, und zwar zeigen
- Fig. 1-4: eine Stapelvorrichtung für tafelförmige Güter (Tafeln) in schematischer Darstellung, wobei sich die abzulegenden Tafeln in verschiedenen Positionen befinden.

Die Figur 1 zeigt -in schematischer Darstellung- eine Stapelvorrichtung 1, die eine Stapelbox 2 sowie eine Einlaufbox 3 aufweist. In der Stapelbox 2 befindet sich ein höhenverstellbarer Stapeltisch 4, auf dem sich eine Palette 5 befindet. Eine Begrenzungswand 6 zwischen Stapelbox 2 und Einlaufbox 3 bildet gleichzeitig eine Ausrichtwand 7 für auf der Palette 5 als Stapel 8 aufeinandergelegte Tafeln 9. Bei den Tafeln 9 handelt es sich um Blechtafeln, die von einer Beschichtungsstation, beispielsweise einer Lackierstraße, kommen und nach Durchlaufen eines Trocknungsofens gestapelt werden. Auf den Stapelvorgang wird nachstehend noch genauer eingegangen. Der Ausrichtwand 7 gegenüberliegend ist ein federnder Anschlag 9' angeordnet, der eine drehbar gelagerte Walze 10 aufweist, an der über die Länge der Walze verteilte Anschlagstangen 11 befestigt sind. Durch die Drehbarkeit der Walze 10 sind die Anschlagstangen 11 in der Lage, in Richtung des Doppelpfeils 12 auszuweichen, wodurch die Federwirkung erzielt ist. Der Abstand zwischen der Ausrichtwand 7 und den Anschlagstangen 11 entspricht der Länge der Tafeln 9 zwischen ihren Vorderkanten 13 und ihren Hinterkanten 14. Beim "Ablageflug" der jeweiligen Tafel werden die Seitenkanten der Tafel mittels entsprechender, dem Tafelformat verstellbar anpaßbarer Wandungen oder dergleichen geführt.

Der Einlaufbox 3 ist eine Transportvorrichtung 15 zugeordnet, die als Riementrum 16 ausgebildet ist. Die Transportebene 17 des Riementrums 16 verläuft horizontal; auf ihr sind -beispielsweise von einer Lackier- und Trocknungsstation kommend- in zueinander beabstandeter Hintereinanderanordnung aufeinanderfolgend Tafeln 9 angeordnet, die sich aufgrund des Riementrums 6 in translatorischer Bewegungsrichtung (Pfeil 18) in Richtung auf den Stapel 8 bzw. in Richtung auf die Palette 5 bewegen. Die Transportebene 17 liegt höher als die Oberseite 19 der Palette 5 bzw. der zuoberst liegenden Tafel 9 des Stapels 8. Die zuoberst liegende Tafel 9 des Stapels 8 weist stets etwa die gleiche Höhe auf, da der Stapeltisch 4 mit zunehmender Stapelhöhe nach unten abgesenkt wird.

Innerhalb der Einlaufbox 3 ist ein Gebläse 20 angeordnet, das mittels eines Laufrades 21 Luft (Pfeile 22) ansaugt und mittels eines Luftleitgehäuses 23 zu einem ersten Luftauslaß 24 sowie einem zweiten Luftauslaß 25 leitet. Die Luftauslässe 24 und 25 sind als erste und zweite Luftdüsen ausgebildet, die derart angeordnet sind, daß die beiden austretenden Luftströme parallel zur Transportebene 17 bzw. parallel zur Oberseite 19 des Stapels 8 ausgestoßen werden, wobei sie gleichgerichtet zur translatorischen Bewegungsrichtung (Pfeil 18) ausströmen (Pfeile 26 und 27).

Der erste Luftauslaß 24 ist dem Endbereich des Riementrums 16 zugeordnet. Er liegt unterhalb der Transportebene 17 und ist oberhalb eines Auftreffelements 28 angeordnet. Das Auftreffelement 28 ist als Auftrefftisch 29 ausgebildet, der eine vorzugsweise ebene Auftrefffläche 30 aufweist, die parallel zur Transportebene 17, also (vorzugsweise) horizontal, verläuft und die sich zwischen dem Ende der Transportvorrichtung 15 und einer gedachten Verlängerung der Begrenzungswand 6 befindet.

Der Auftrefffläche 30 ist eine Bremsvorrichtung 31 zugeordnet, die als Saugtrommel 32 ausgebildet ist, d. h., sie ist drehbar gelagert und dreht sich in gleicher Drehrichtung zu den Umlenkrädern des Riementrums 16, jedoch mit verringerter Geschwindigkeit oder -nach einem anderen Ausführungsbeispielin Gegenrichtung zu den Umlenkrädern. Die Mantelfläche der Saugtrommel 32 ist mit Durchbrüchen versehen, wobei das Innere der Saugtrommel 32 mit einer Vakuumvorrichtung in Verbindung steht. Auf auf die Mantelfläche der Saugtrommel 32 auftreffende Gegenstände wird somit aufgrund der Saugwirkung eine Haltewirkung ausgeübt. Die Saugtrommel 32 durchsetzt mit einem Abschnitt ihres Mantels eine Öffnung 33 im Auftrefftisch 29.
weise·befindet·sich·eine·Palette· oder· dergleichen· tisches 29 ist der zweite Luftauslaß 29 zugeordnet, der sich unterhalb der Auftrefffläche 30 des Auftrefftisches 29 befindet, jedoch oberhalb der Oberseite 19 des Stapels 8 liegt.

Nachfolgend wird die Funktion der Stapelvorrichtung 1 näher beschrieben. Zum besseren Verständnis sei angenommen, daß der kontinuierliche Ablagevorgang der Tafeln 9 gedanklich unterbrochen sei, so daß das Stapeln der Tafeln 9 neu begonnen wird, wobei die nachstehenden Ausführungen jedoch ebenso für das kontinuierliche, also ununterbrochene Stapeln gelten. Das Riementrum 16 fördert in translatorischer Bewegung (Richtung des Pfeils 18) eine Tafel 9A, der mit geringem Abstand eine Folgetafel 9B folgt, die aufgrund der Auflage auf der Transportebene 17 des Riementrums 16 die gleiche translatorische Geschwindigkeit aufweist. Wie aus der Figur 1 ersichtlich, ist dem Riementrum 16 ein weiteres Trum 34 vorgeschaltet -das in einem kontinuierlichen Förderstrom- weitere Tafeln nachliefert, die zueinander beabstandet eine Hintereinanderanordnung aufweisen.

Gemäß Figur 1 überragt die Tafel 9A das Ende der Transportvorrichtung 15 etwa hälftig, d.h., die Vorderkante 13 befindet sich nicht mehr auf dem Riementrum 16; dort liegt jedoch noch die Hinterkante 14 der Tafel 9A auf.

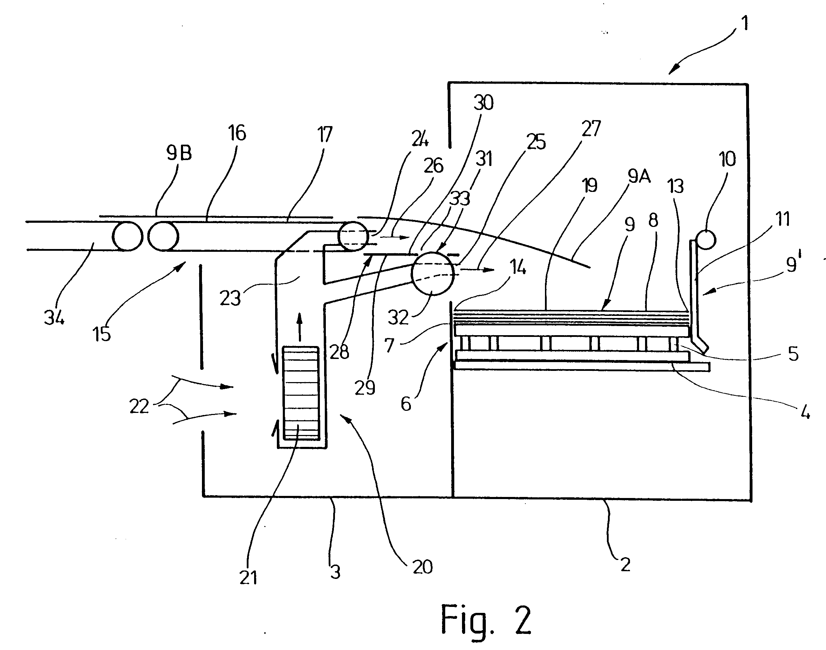

Im Zuge des weiteren Transports beginnt sich -gemäß Figur 2- die Tafel 9A in Richtung auf die Oberseite 19 des bereits vorhandenen Stapels 8 abzusenken, wobei aufgrund der beiden aus den Luftauslässen 24 und 25 austretenden Luftströme ein "Schwimmzustand" vorliegt, d.h., die Vorderkante 13 der Tafel 9 ruht auf einem Luftpolster.

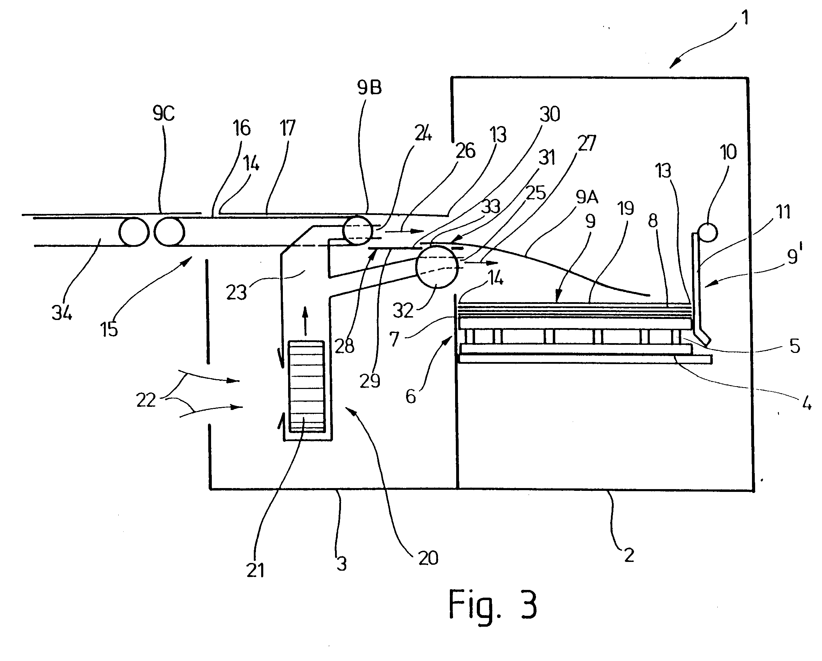

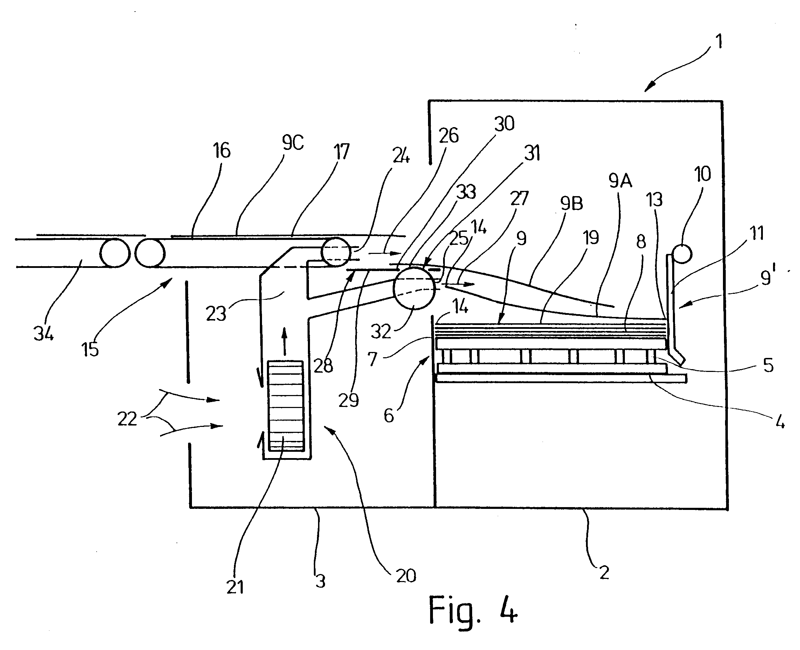

Im Zuge der weiteren Transportbewegung wird -gemäß Figur 3- die Hinterkante 14 der Tafel 9A freigegeben, d.h., sie liegt nicht mehr auf dem Riementrum 16 auf, sondern wird -aufgrund der Sogwirkung des aus dem Luftauslaß 24 austretenden Luftstromes beschleunigt in Ablagerichtung bewegt, wobei diese Ablagerichtung quer, insbesondere senkrecht, zur translatorischen Bewegungsrichtung verläuft. Der der Hinterkante 14 der Tafel 9A zugeordnete Bereich trifft somit auf den Auftrefftisch 29, wobei dieser Bereich von der Saugtrommel 32 erfaßt wird. Hierdurch erfolgt eine Abbremsung der translatorischen Bewegung der Tafel 9A derart, daß sie mit entsprechend verminderter Geschwindigkeit sich weiter in Richtung auf den Anschlag 9' bewegt, bis sie dort - gemäß Figur 4- mit ihrer Vorderkante 14 anschlägt, wodurch die translatorische Bewegung gestoppt wird.

Aufgrund dieser Bremswirkung wird -gemäß Figur 3- die Tafel 9A von der Vorderkante 13 der Folgetafel 9B überholt, d.h., es kommt zu einer Überlappungsposition der beiden Tafeln.

Gemäß Figur 4 senkt sich die vorhergehende Tafel 9A unter Verdrängen des Luftkissens auf den bereits vorhandenen Stapel 8 ab, wobei die Hinterkante 14 aufgrund der Sogwirkung des aus dem zweiten Luftauslaß 25 ausströmenden Luftstromes beschleunigt in Richtung auf die Oberseite 19 des Stapels 8 bewegt wird. Die in Überlappungsposition folgende Tafel 9B wird mittels der Bremsvorrichtung 31 abgebremst; sie berührt jedoch die vorhergehende Tafel 9A nicht, sondern zwischen diesen beiden Tafeln ist ein Luftkissen ausgebildet.

Die Figur 4 zeigt ferner, daß bereits eine weitere Tafel 9C folgt, die dann entsprechend -wie vorstehend beschrieben- abgelegt wird. Der Ablagevorgang geht in einem kontinuierlichen Strom gelieferter Tafeln vor sich, so daß es zu einer sogenannten Schuppenstapelung kommt, wobei dieser Begriff aus der kurzfristig vorliegenden Überlappungsposition der jeweils relevanten Tafeln resultiert.

Alternativ zu dem vorstehend beschriebenen Ausführungsbeispiel ist es auch möglich, daß der Anschlag 9' nicht mehrere Anschlagstege, sondern eine durchgehende Anschlagplatte aufweist. Der Anschlag kann mit oder ohne Materialauflage zum Dämpfen der auftreffenden Vorderkanten 13 der Tafeln 9 versehen sein. Es ist auch möglich, daß für die Anschlagstege oder die Anschlagplatte Federstahl oder andere elastische Materialien zur Stoßabsorption verwendet wird, d.h., durch die Nachgiebigkeit dieses Federstahls wird eine Dämpfung erzeugt. In einem solchen Falle ist es nicht erforderlich, daß der Anschlag um eine Achse wegschwenken kann.

Die Bremsvorrichtung 31 kann alternativ zum vorstehend beschriebenen Ausführungsbeispiel auch als gelochte Platte ausgebildet sein, wobei die Löcher an die Vakuumquelle angeschlossen sind. Ferner ist es möglich, die Bremsvorrichtung als vorzugsweise einstellbare Magnete auszubilden, wobei es dann allerdings erforderlich ist, daß die Tafeln aus ferromagnetischem Material bestehen. Nach einem anderen Ausführungsbeispiel ist es auch denkbar, daß die Bremsvorrichtung als Wirbelstrombremse ausgebildet ist. Die Bremsvorrichtung kann feststehen oder bewegt, insbesondere pendelnd oder drehend, ausgebildet sein. Anstelle einer Saugtrommel ist es auch möglich, mehrere, beabstandet zueinander angeordnete Saugscheiben zu verwenden. Die Bremswirkung der Bremsvorrichtung kann kontinuierlich oder intermittierend sein. Nach einem nicht dargestellten Ausführungsbeispiel kann für die Erzeugung des Luftpolsters und für das Erzeugen des Vakuums zur Absenkung der Hinterkanten der Tafeln jeweils eine separate Vorrichtung vorgesehen sein. Diese beiden Vorrichtungen arbeiten dann jeweils für sich. Es ist auch möglich, nur eine der beiden Vorrichtungen vorzusehen, also jeweils nur eine der genannten Wirkungen herbeizuführen.

## Patentansprüche

1. Vorrichtung (1) zum Stapeln von Tafeln (9), insbesondere von Blechtafeln, die mit einer Transportvorrichtung (15) entlang einer horizontalen Transportebene (17) aufeinanderfolgend translatorisch herangeführt werden, an deren Ende eine erste Tafel (9) im Bereich ihrer Vorderkante (13) unterseitig von einem ersten Luftstrom beaufschlagt wird und nachfolgend die erste Tafel (9) im Bereich ihrer Hinterkante durch Saugwirkung zu einer Auftrefffläche (30) gesaugt und dort mittels einer Bremsvorrichtung (31) gebremst wird, so daß die Vorderkante (13) einer auf die erste Tafel (9) folgenden Tafel (9) die Hinterkante (14) der ersten Tafel (9) berührungsfrei überlappt, **dadurch gekennzeichnet**, daß die Transportvorrichtung (15) die Tafeln (9) beabstandet zueinander fördert, daß der erste Luftstrom (26) und darunter die Auftrefffläche (30) der Bremsvorrichtung (31) parallel zur Transportebene (17) verlauften und die Auftrefffläche zur Transportebene (17) so beabstandet und von derartiger Länge ist, daß eine Tafel (9) im Bereich ihrer Vorderkante (13) auf einem Luftpolster ruht, während sie im Bereich ihrer Hinterkante (14) durch Saugwirkung infolge eines Unterdrucks zur Auftrefffläche (30) bewegt wird.

2. Vorrichtung nach Anspruch 1, **gekennzeichnet** durch einen Anschlag, gegen den die jeweilige abgebremste Tafel (9) mit reduzierter Geschwindigkeit mit ihrer Vorderkante (13) zur Stapelbildung trift.

3. Vorrichtung nach einem der vorhergehenden Ansprüche, **dadurch gekennzeichnet**, daß dem einem Stapeltisch (4) zugewandten Endbereich der Auftrefffläche (30) mindestens ein mit einem Gebläse (20) zusammenwirkender, zweiter Luftauslaß (25) zugeordnet ist, aus dem ein etwa in Transportrichtung (18) weisender zweiter Luftstrom austritt.

4. Vorrichtung nach Anspruch 3, **dadurch gekennzeichnet**, daß der zweite Luftauslaß (25) derart als zweite Luftdüse ausgebildet ist, daß der Bereich der Hinterkante einer Tafel (9) beim Ablagevorgang durch Saugwirkung infolge eines weiteren Unterdrucks in Ablagerichtung bewegt wird.

## Claims

1. Apparatus (1) for stacking plates (9), in particular sheet-metal plates, which are advanced in succession along a horizontal transporting plane (17) in a translatory manner by means of a transporting arrangement (15) at the end of which the underside of a first plate (9) is acted upon in the region of the front edge (13) thereof by a first air stream and then the rear-edge region of the first plate (9) is sucked by suction effect towards a impact surface (30) and there is braked by means of a brake arrangement (31), so that the front edge (13) of a plate (9) following the first plate (9) overlaps without contact the rear edge (14) of the first plate (9), characterised in that the transporting arrangement (15) conveys the plates (9) at a distance from one another, in that the first air stream (26) and therebelow the impact surface (30) of the brake arrangement (31) extend parallel to the transporting plane (17) and the impact surface is such in distance from the transporting plane (17) and is such in length that a plate (9) rests on a air cushion in the region of its front edge (13), while in the region of its rear edge (14) it is moved towards the impact surface (30) through suction effect due to a underpressure.

2. Apparatus in accordance with Claim 1, characterised by a stop against which the front edge (13) of the specific braked plate (9) in question impacts at reduced speed for stack formation.

3. Apparatus in accordance with either one of the preceding Claims, characterised in that at least one second air outlet (25) co-operating with a fan (20) is associated with the end region, facing a stacking table (4), of the impact surface (30), a second air stream directed approximately in the transporting direction (18) issuing from this second air outlet (25).

4. Apparatus in accordance with Claim 3, characterised in that the second air outlet (25) is in the form of a second air nozzle in such a manner that the region of the rear edge of a plate (9) is moved in the depositing direction during depositing through suction effect due to a further underpressure.

## Revendications

1. Dispositif pour empiler (1) des plaques (9), notamment des plaques de tôle, qui sont approchées les unes après les autres avec un mouvement de translation à l'aide d'un dispositif de transport (15) le long d'un plan de transport horizontal (17), à l'extrémité duquel une première plaque (9) est sollicitée par le dessous dans la zone de son arête avant (13) par un premier flux d'air, puis la première plaque (9) est aspirée dans la zone de son arête arrière vers une surface d'appui (30) et y est freinée au moyen d'un dispositif de freinage (31), si bien que l'arête avant (13) d'une plaque (9) succédant à la première plaque (9) chevauche l'arête arrière (14) de la première plaque (9) sans la toucher, caractérisé en ce que le dispositif de transport (15) transporte les plaques (9) de façon espacée, en ce que le premier flux d'air (26) et, au-dessous de celui-ci, la surface d'appui (30) du dispositif de freinage (31) s'étendent parallèlement au plan de transport (17), et en ce que la surface d'appui présente par rapport au plan de transport (17) un écart et une longueur tels qu'une plaque (9) repose dans la zone de son arête avant (13) sur un coussin d'air, tandis que, dans la zone de son arête arrière (14), elle est déplacée vers la surface d'appui (30) par l'aspiration due à une dépression.

2. Dispositif selon la revendication 1, caractérisé par une butée que la plaque freinée (9) heurte à vitesse réduite avec son arête avant (13) pour former une pile.

3. Dispositif selon l'une des revendications précédentes, caractérisé en ce qu'au moins une seconde sortie d'air (25) coopérant avec un ventilateur (20) est associée à la zone d'extrémité de la surface d'appui (30) tournée vers une table d'empilage (4), par laquelle sort un second flux d'air dirigé approximativement dans la direction de transport (18).

4. Dispositif selon la revendication 3, caractérisé en ce que la seconde sortie d'air (25) est réalisée en tant que buse d'air de manière à ce que, lors de l'empilage, la zone de l'arête arrière d'une plaque (9) se déplace dans la direction d'empilage du fait de l'aspiration causée par une autre dépression.
